# EUROPÄISCHE PATENTSCHRIFT

(11) **EP 3 195 912 B1**
(45) Veröffentlichungstag und Bekanntmachung des Hinweises auf die Patenterteilung: **26.12.2018**
(21) Anmeldenummer: 16001816.4
(22) Anmeldetag: 18.08.2016
(51) Int. Cl.: A63H 17/00, B60N 2/06, B60N 2/08, B60N 2/38, B60N 2/00

(54) **KINDERFAHRZEUG**
CHILDREN'S VEHICLE
VEHICULE POUR ENFANTS

(30) Priorität: 21.01.2016 DE 102016000524
(43) Veröffentlichungstag der Anmeldung: 26.07.2017
(73) Patentinhaber: Franz Schneider GmbH & Co. KG, 96465 Neustadt (DE)
(72) Erfinder: Rainer, Luther, 96465 Neustadt (DE)
(74) Vertreter: Flosdorff, Jürgen

(56) Entgegenhaltungen:
- EP-A2- 2 279 903
- DE-U1- 29 819 983
- US-A1- 2004 011 939
- US-A1- 2011 198 822

## Beschreibung

Die Erfindung betrifft ein Kinderfahrzeug mit einem Sitz, auf dem ein Kind sitzt, um beispielsweise das Fahrzeug mit einer Tretkurbel anzutreiben. Das Kinderfahrzeug kann aber auch einen Motor haben oder ein sogenanntes Rutscherfahrzeug sein, bei dem sich ein Kind mit den Füßen am Boden abstößt.

Die Erfindung wird nachfolgend im Zusammenhang mit einem Tretfahrzeug beschrieben.

Kinderfahrzeuge der betrachteten Art haben üblicherweise einen feststehenden , unverstellbaren Sitz.

Da ein derartiges Kinderfahrzeug von Kindern unterschiedlichen Alters und unterschiedlicher Größe benutzt wird, besteht ein Problem darin, dass nicht jedes Kind die Pedale so erreichen kann, dass es diese betätigen kann, indem es entspannt und ruhig auf dem Fahrzeugsitz sitzt. Wenn ein Kind zu klein ist, um die Pedale in entspannter Körperhaltung zu erreichen, kann das Kind auf seinem Sitz nach vorne rutschen, wobei die Gefahr besteht, dass das Kind von dem Fahrzeug z.B. bei einer Kurvenfahrt herunter fällt. Große Kinder mit langen Beinen können das Problem haben, die Beine beim Fahren zu sehr anziehen zu müssen. Außerdem zeigt die Offenbarung DE 298 19 983 U1 ein Beispiel eines Kinderfahrzeuges mit einem verstellbaren Sitz.

Der vorliegenden Erfindung liegt die Aufgabe zugrunde, eine Lösung für dieses Problem anzugeben und den Sitz verstellbar anzuordnen, ohne dass die Verstellbarkeit für ein Kind, das den Verstellmechanismus während der Fahrt bedienen will, eine Gefährdung bzw. Verletzungsgefahr mit sich bringt.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass das Kinderfahrzeug eine Verstellrastereinrichtung, mit der eine von mehreren möglichen Positionen des Sitzes in Längsrichtung des Kinderfahrzeugs einstellbar ist, und eine Sicherungsrastereinrichtung enthält, die die Verstellung der Position des Sitzes nur dann zulässt, wenn der Sitz nicht durch ein Gewicht belastet ist. Dies ist so zu verstehen, dass die Sicherungsrastereinrichtung dann eine Verstellung der Position des Sitzes verhindert, wenn ein Kind auf dem Fahrzeugsitz sitzt. Um den Sitz verstellen zu können, muss das Kind von dem Fahrzeug absteigen, wodurch der Verstellmechanismus freigegeben ist.

Hierdurch ist zuverlässig verhindert, dass ein Kind während der Fahrt, aber auch im ruhenden Zustand des Kinderfahrzeugs den Sitz verstellt, während es auf dem Sitz sitzt, so dass ausgeschlossen ist, dass infolge der Verstellung des Sitzes ein Kind von dem Fahrzeug herunter fällt oder sich auf andere Weise verletzt.

In Ausgestaltung der Erfindung kann auf dem Chassis des Kinderfahrzeugs ein Sitzklotz angeordnet sein, der entweder einstückig mit dem Chassis oder Grundkörper des Kinderfahrzeugs ausgebildet ist, wenn dieser vorzugsweise im Blasverfahren hergestellt ist, oder der auf dem Grundkörper beispielsweise angeschraubt sein kann. Dieser Grundkörper sollte in der Längsrichtung beabstandete Einsenkungen der Verstellrastereinrichtung und der Sicherungsrastereinrichtung aufweisen.

Weiter wird vorgeschlagen, dass unter dem Sitz ein Rahmenteil befestigt ist, das eine Bodenwand und zwei parallele Seitenwände hat, von denen Führungselemente nach innen abstehen, die in Führungsnuten in den Außenwänden des Sitzklotzes eingreifen. Dabei können die Führungselemente eine unterschiedliche Höhe haben. Bevorzugt ist, dass jede Seitenwand ein vorderes und ein hinteres Führungselement aufweist, wobei die hinteren Führungselemente eine größere Höhe haben als die vorderen Führungselemente. Der Sitz wird mit seinem Rahmenteil so auf dem Sitzklotz befestigt, dass er von der rückwärtigen Stirnkante des Sitzklotzes aus mit den Führungselementen in die Führungsnuten des Sitzklotzes eingesetzt und vorwärts geschoben wird, bis der nachfolgend beschriebene Verstellmechanismus eine ausgewählte Position in Längsrichtung des Sitzklotzes fixiert. Die Führungsnuten in den Außenwänden des Sitzklotzes haben etwa in der Mitte ihrer Erstreckung eine Engstelle, die als Anschlag für die größeren hinteren Führungselemente des Rahmenteils dienen, so dass der Sitz nicht weiter auf dem Sitzklotz vorgeschoben werden kann.

Die Verstellrastereinrichtung hat wenigstens einen Federarm, bevorzugt zwei seitlich beabstandete Federarme, die am Endbereich von der Bodenwand nach unten, d.h. zu dem Sitzklotz hin, vorstehende Blockierelemente haben, die in die Einsenkungen der Verstellrastereinrichtung in dem Sitzklotz passen und in dem entspannten Zustand der Federarme jeweils in eine Einsenkung eingreifen. Die beiden nebeneinander angeordneten Federarme sind bevorzugt am Rand einer zugehörigen Aussparung befestigt, vorzugsweise angeformt, wobei die Federarme mit ihren Längsseiten und der freien Stirnseite von der Bodenwand frei geschnitten sein können, wenn deren Material ausreichend elastisch ist.

Die zwei Federarme sind mit einem vorne über den Sitz vorstehenden Handgriff verbunden, der anhebbar ist, um die Blockierelemente am freien Endbereich der Federarme aus den Einsenkungen des Sitzklotzes austreten zu lassen und die Position des Sitzes zu verstellen, wenn dies die nachfolgend beschriebene Sicherungsrastereinrichtung zulässt.

Die Sicherungsrastereinrichtung hat wenigstens eine Feder und wenigstens ein Blockierelement an der Bodenwand und in der Längsrichtung beabstandete zugehörige Einsenkungen in dem Sitzklotz, wobei die wenigstens eine Feder im entspannten Zustand von der Bodenwand nach unten, d.h. zu dem Sitzklotz hin vorsteht und die Bodenwand gegenüber dem Sitzklotz anhebt, wenn niemand auf dem Sitz sitzt, wobei in diesem Zustand das wenigstens eine Blockierelement über den Einsenkungen gehalten ist. Wenn das Kind hingegen auf dem Sitz sitzt, wird die Bodenwand gegen die Wirkung der Feder nach unten gedrückt, wobei das wenigstens eine Blockierelement in eine der Einsenkungen eintritt.

Die Federeinrichtung besteht vorzugsweise aus einer gewölbten Blattfeder, die am Rand einer Aussparung angebracht sein kann, so dass die Blattfeder bei Belastung des Sitzes in die Aussparung gedrückt wird und das wenigstens eine Blockierelement in die Einsenkung eintritt. Bevorzugt sind zu beiden Seiten der Blattfeder Blockierelemente und in dem Sitzklotz zwei Reihen von miteinander fluchtenden Einsenkungen ausgebildet. Hierzu wird betont, dass die Anordnung auch umgekehrt getroffen sein kann, indem von dem Sitzklotz die Blockierelemente vorstehen und in der Bodenwand entsprechende Einsenkungen ausgebildet sind.

Weitere Einzelheiten der Erfindung ergeben sich aus der nachfolgenden Beschreibung einer bevorzugten Ausführungsform des Kinderfahrzeugs und anhand der Zeichnungen. Dabei zeigen:

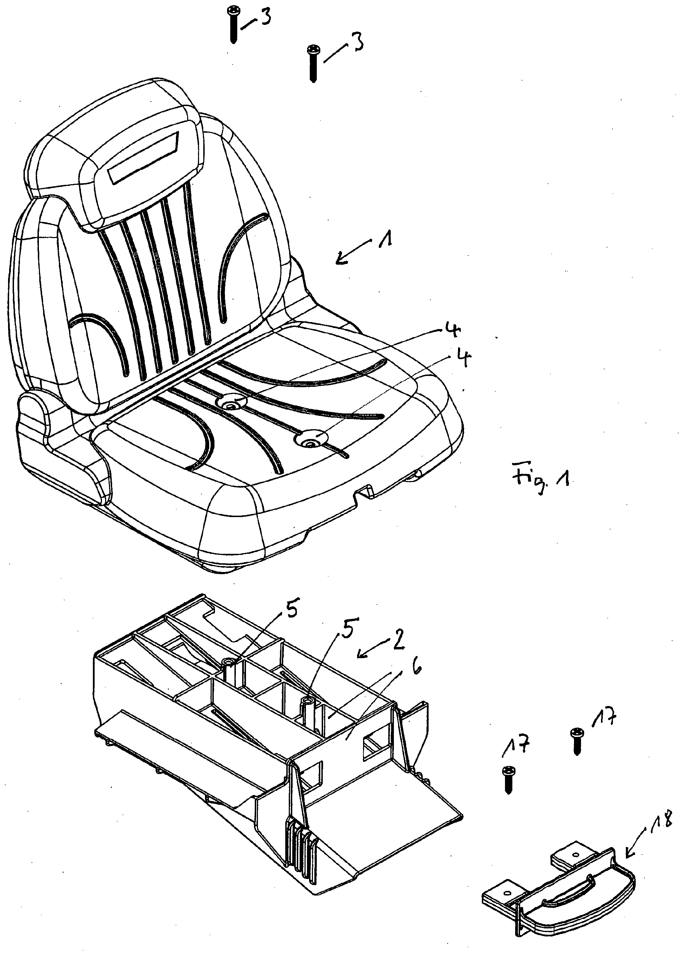

- Figur 1: die Bestandteile des Sitzes in auseinander gezogener Darstellung;
- Figur 2: der zusammengesetzte Sitz;
- Figur 3: der Sitz in einer perspektivischen Ansicht von unten;
- Figur 4: eine Unteransicht des Sitzes;

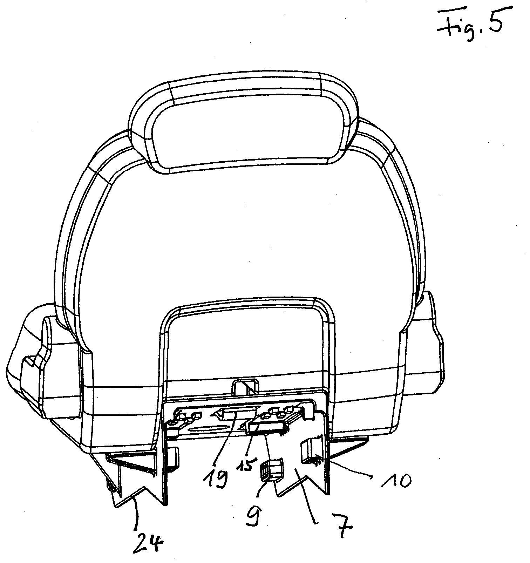

- Figur 5: eine rückwärtige Ansicht des Sitzes;
- Figur 6: den rückwärtigen Teil eines Kindertretfahrzeugs und den Sitz vor der Montage;
- Figur 7: den Sitz in der rückwärtigen Position auf dem Kinderfahrzeug;
- Figur 8: eine vorgeschobene Position des Sitzes.

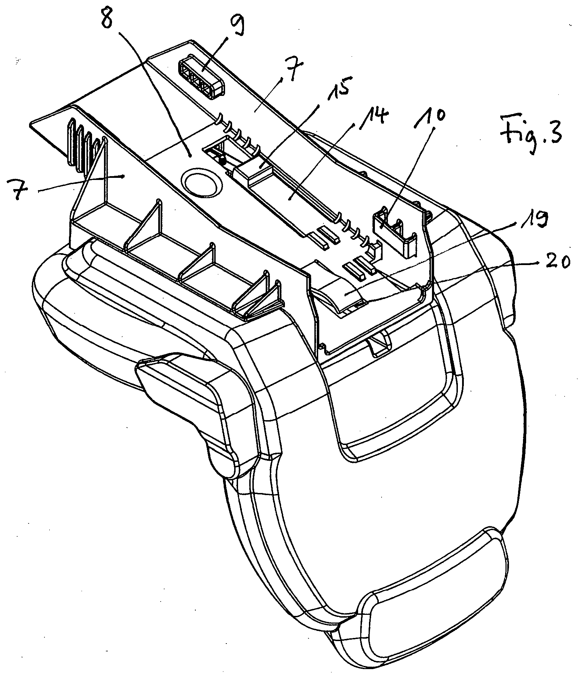

Unter dem im Blasverfahren aus Kunststoff hergestellten Sitz 1 wird ein Rahmenteil 2 mittels zweier Schrauben 3 angeschraubt, die durch Löcher 4 in dem Sitz 1 hindurch in Innengewinde von Ansätzen 5 des Rahmenteils 2 eingeschraubt werden. Das durch Quer- und Längswände 6 ausgesteifte Rahmenteil 2 enthält - wie insbesondere Figur 3 zeigt - an seiner Unterseite zwei parallele Seitenwände 7, die von einer Bodenwand 8 abstehen.

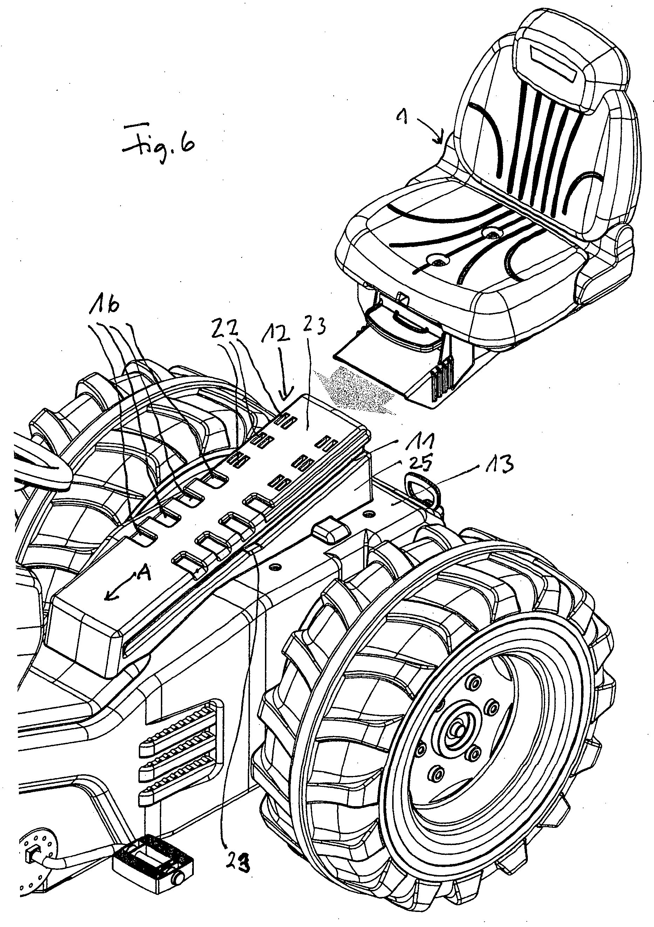

An den Innenseiten der Seitenwände 7 sind jeweils ein vorderes Führungselement 9 und ein rückwärtiges Führungselement 10 angesetzt. Diese Führungselemente 9, 10 greifen bei der Anbringung des zusammengesetzten Sitzes in seitliche Führungsnuten 11 eines Sitzklotzes 12 ein, wie Figur 6 zeigt. Der Sitzklotz 12 ist fester Bestandteil des Fahrzeuggrundkörpers 13.

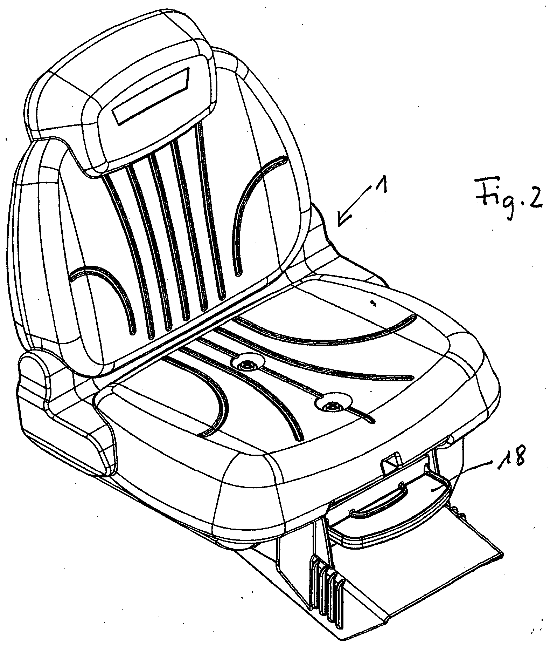

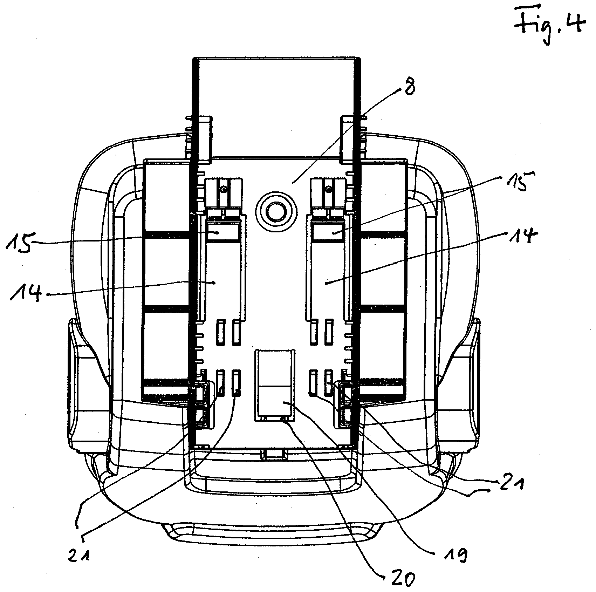

Wie insbesondere die Figuren 3 und 4 zeigen, sind aus der Bodenwand 8 zwei Federarme 14 frei geschnitten, die an ihrem freien Ende jeweils ein nach unten, d.h. zu dem Sitzklotz 12 hin vorstehendes Blockierelement 15 von im wesentlichen kubischer Form aufweist. Diese Blockierelemente 15 sind dazu vorgesehen, um in jeweils eine von vier in Längsrichtung (Pfeil A) voneinander beabstandete Einsenkungen in dem Sitzklotz 11 einzugreifen. Die zwei Federarme 14 sind im Bereich der Blockierelemente 15 durch Schrauben 17 mit einem Handgriff 18 verbunden, der - wie Figur 2 zeigt - unter dem Sitz 1 nach vorne übersteht und angehoben werden kann, damit die Blockierelemente 15 aus den jeweiligen Einsenkungen 16 austreten.

Von der Unterseite der Bodenwand 8 steht im Bereich von deren rückwärtigen Endabschnitt eine gekrümmte Blattfeder 19 vor, die am Rand einer Aussparung 20 befestigt oder angeformt ist. An beiden Seiten der Blattfeder 19 stehen von der Unterseite der Bodenwand 8 außerdem Blockierelemente 21 nach unten ab, die in Einsenkungen 22 in der oberen Wand 23 des Sitzklotzes 12 passen. Die Blattfeder 19 liegt an der Wand 23 des Sitzklotzes 11 zwischen den Einsenkungen 22 an.

Wenn niemand auf dem Sitz 1 sitzt, hebt die Blattfeder 19 den gesamten Sitz soweit an, dass die Blockierelemente 21 aus den zugehörigen Einsenkungen 22 austreten. In diesem Zustand kann die Position des Sitzes verstellt werden. Wenn aber ein Kind auf dem Sitz 1 sitzt, wird die Blattfeder 19 zurück gedrückt und die Blockierelementen 21 befinden sich in zugehörigen Einsenkungen 22, so dass der Verstellmechanismus blockiert ist.

Die Führungsnuten 11 des Sitzklotzes 12 haben eine Unstetigkeits- oder Engstelle 23, die als Anschlag für die Führungselemente 10, die höher sind als die Führungselemente 9, dient. Der untere Rand 24 der Seitenwände 7 hat einen abgewinkelten Verlauf, der an den Verlauf der Seitenwände 25 des Sitzklotzes 12 auf dem Grundkörper 13 angepasst ist.

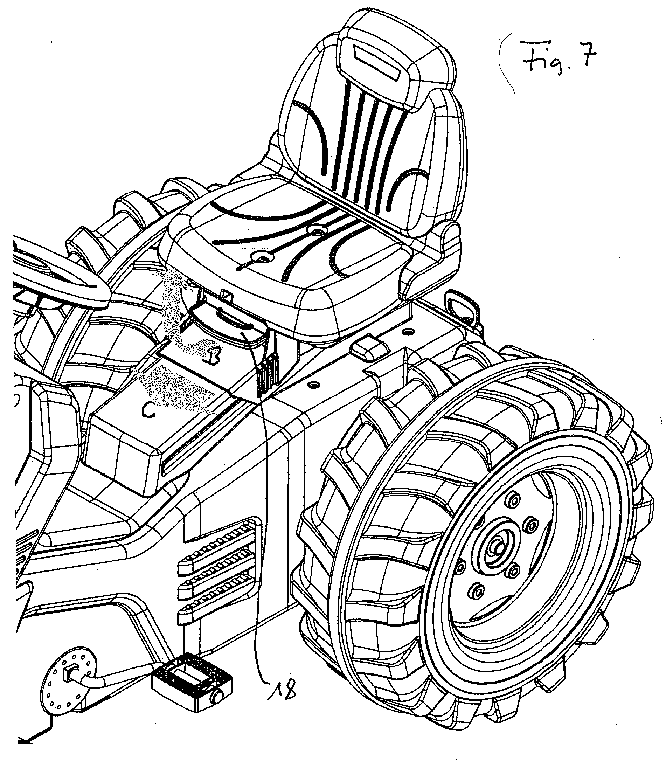

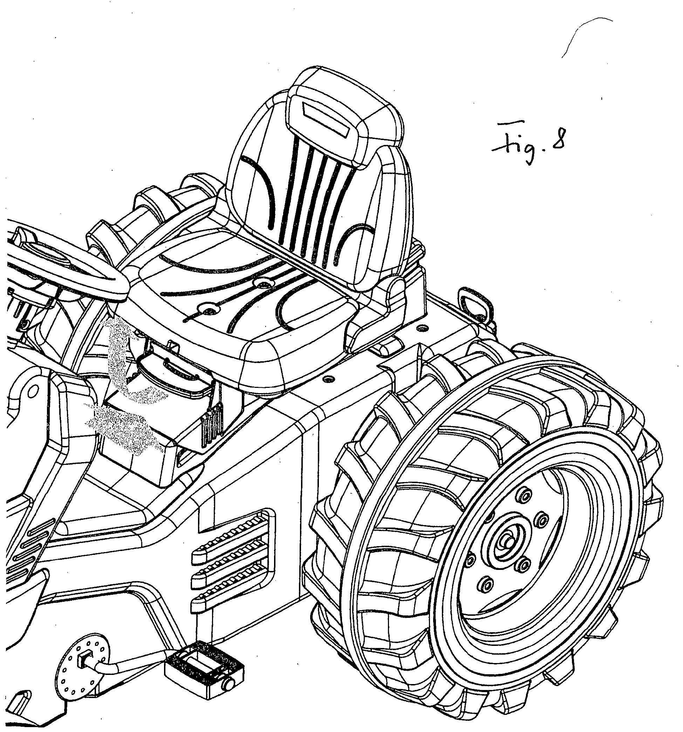

Figur 6 zeigt, dass der zusammengesetzte Sitz 1 von der Rückseite des Tretfahrzeugs auf den Sitzklotz 12 aufgeschoben wird. Figur 7 zeigt die rückwärtige Position des Sitzes auf dem Sitzklotz 12, auf dem der Sitz nach Anheben des Handgriffs 18 (Pfeil B) vorwärts geschoben werden kann, was durch den Pfeil C angedeutet ist. Figur 8 zeigt die vordere Endposition des Sitzes 1, aus der der Sitz zurück geschoben werden kann, wenn kein Kind auf dem Sitz sitzt.

## Patentansprüche

1. Kinderfahrzeug mit einem Sitz, mit einer Verstellrastereinrichtung, mit der eine ausgesuchte Position des Sitzes (1) in Längsrichtung (A) des Kinderfahrzeugs einstellbar ist, **gekennzeichnet durch** eine Sicherungsrastereinrichtung, die die Verstellrastereinrichtung nur dann zur Verstellung der jeweiligen Position frei gibt, wenn der Sitz (1) unbelastet ist.

2. Kinderfahrzeug nach Anspruch 1,
**dadurch gekennzeichnet,**
**dass** auf dem Grundkörper (13) des Kinderfahrzeugs ein Sitzklotz (12) angeordnet ist, der in der Längsrichtung beabstandete Einsenkungen (16,22) der Verstellrastereinrichtung und der Sicherungsrastereinrichtung aufweist.

3. Kinderfahrzeug nach Anspruch
**dadurch gekennzeichnet,**
**dass** unter dem Sitz ein Rahmenteil (2) befestigt ist mit einer Bodenwand (8) und zwei parallelen Seitenwänden (7), von denen Führungselemente (9,10) nach innen abstehen, die in Führungsnuten (11) in den Außenwänden (25) des Sitzklotzes (12) eingreifen.

4. Kinderfahrzeug nach den Ansprüchen 1 bis 3,
**dadurch gekennzeichnet,**
**dass** die Verstellrastereinrichtung wenigstens einen Federarm (14) aufweist, der an der Bodenwand (8) befestigt ist und am Endbereich ein nach unten vorstehendes Blockierelement (15) hat, das in die Einsenkungen (16) der Verstellrastereinrichtung passt und in dem entspannten Zustand des Federarms (14) in eine Einsenkung (16) eingreift.

5. Kinderfahrzeug nach Anspruch 4,
**dadurch gekennzeichnet,**
**dass** zwei seitlich beabstandete Federarme (14) mit jeweils einem Blockierelement (15) und zwei entsprechend seitlich beabstandete Reihen von Einsenkungen (16) ausgebildet sind.

6. Kinderfahrzeug nach den Ansprüchen 1 bis 5,
**dadurch gekennzeichnet,**
**dass** die Sicherungsrastereinrichtung eine Federeinrichtung (19) und wenigstens ein Blockierelement (21) an der Bodenwand (8) und in der Längsrichtung beabstandete zugehörige Einsenkungen (22) in dem Sitzklotz (12) aufweist, wobei die Federeinrichtung (19) im entspannten Zustand von der Bodenwand (8) nach unten vorsteht, derart, dass das wenigstens eine Blockierelement (21) außerhalb der Einsenkungen (22) ist.

7. Kinderfahrzeug nach Anspruch 6,
**dadurch gekennzeichnet,**
**dass** die Federeinrichtung (19) eine vorzugsweise gewölbte Blattfeder ist, die am Rand einer Aussparung (20) angebracht ist und bei Belastung des Sitzes (1) in die Aussparung (20) gedrückt wird, wobei das wenigstens eine Blockierelement (21) in eine der Einsenkungen (22) eintritt.

8. Kinderfahrzeug nach den Ansprüchen 6 oder 7,
**dadurch gekennzeichnet,**
**dass** zu beiden Seiten der Federeinrichtung (19) Blockierelemente (21) und in dem Sitzklotz (12) zwei Reihen von miteinander fluchtenden Einsenkungen (22) ausgebildet sind.

9. Kinderfahrzeug nach den Ansprüchen 1 bis 8,
**dadurch gekennzeichnet,**
**dass** der wenigstens eine Federarm (14), bevorzugt zwei Federarme (14) mit einem vorne über den Sitz (1) vorstehenden Handgriff (18) verbunden sind, der anhebbar ist, damit die Blockierelemente (15) der Verstellrastereinrichtung aus den Einsenkungen (16) austreten.

10. Kinderfahrzeug nach den Ansprüchen 1 bis 9,
**dadurch gekennzeichnet,**
**dass** die Führungsnuten (11) in den Außenwänden (25) des Sitzklotzes (12) eine Engstelle (23) aufweisen, die zur Begrenzung des Vorschubs des Sitzes (1) als Anschlag für rückwärtige Führungselemente (10) des Rahmenteils (2) dienen.

## Claims

1. A children's vehicle with a seat, including an adjustable locking device, with which a desired position of the seat (1) in the longitudinal direction (A) of the children's vehicle may be set, **characterised by** a security locking device which releases the adjustable locking device for adjustment of the current position only when the seat (1) is unloaded.

2. A children's vehicle as claimed in Claim 1, **characterised in that** arranged on the base body (13) of the children's vehicle there is a seat block (12), which includes recesses (16, 22), spaced apart in the longitudinal direction, for the adjustable locking device and the security locking device.

3. A children's vehicle as claimed in Claim 2, **characterised in that** fastened beneath the seat there is a frame portion (2) with a base wall (8) and two parallel side walls (7), projecting inwardly from which are guide elements (9, 10), which engage in guide grooves (11) in the outer walls (25) of the seat block (12).

4. A children's vehicle as claimed in Claims 1 to 3, **characterised in that** the adjustable locking device includes at least one spring arm (14), which is fastened to the base wall (8) and on the end region has a downwardly projecting blocking element (15), which fits into the recesses (16) of the adjustable locking device and engages into a recess (16) in the relaxed state of the spring arm (14).

5. A children's vehicle as claimed in Claim 4, **characterised in that** two laterally spaced spring arms (14) with respective blocking elements (15) and two correspondingly laterally spaced rows of recesses (16) are provided.

6. A children's vehicle as claimed in Claims 1 to 5, **characterised in that** the security locking device includes a spring device (19) and at least one blocking element (21) on the base wall (8) and associated recesses (22) in the seat block (12) spaced apart in the longitudinal direction, wherein the spring device (19) projects downwardly in the relaxed state of the base wall (8) such that the at least one blocking element (21) is outside the recesses (22).

7. A children's vehicle as claimed in Claim 6, **characterised in that** the spring device (19) is a preferably arched leaf spring, which is attached to the edge of an opening (20) and is pushed into the opening (20) on loading of the seat (1), wherein the at least one blocking element (21) moves into one of the recesses (22).

8. A children's vehicle as claimed in Claims 6 or 7, **characterised in that** blocking elements (21) are provided on both sides of the spring device (19) and two rows of aligned recesses (22) are provided in the seat block (12).

9. A children's vehicle as claimed in Claims 1 to 8, **characterised in that** the at least one spring arm (14), preferably two spring arms (14), are connected to a handle (18) projecting forwardly beyond the seat (1), which is liftable so that the blocking elements (15) of the adjustable locking device move out of the recesses (16).

10. A children's vehicle as claimed in Claims 1 to 9, **characterised in that** the guide grooves (11) in the outer walls (25) of the seat block (12) have a narrow portion (23), which serves as an abutment for rear guide elements (10) on the frame portion (2) to limit the advance of the seat (1).

## Revendications

1. Véhicule pour enfants avec un siège,
avec un dispositif de réglage à crans, avec lequel une position choisie du siège (1) est réglable dans une direction longitudinale (A) du véhicule pour enfants, **caractérisé par**
un dispositif de sécurité à crans, qui libère le dispositif de réglage à crans pour le réglage de la position respective uniquement lorsque le siège (1) n'est pas chargé.

2. Véhicule pour enfants selon la revendication 1,
**caractérisé en ce**
**qu'**un bloc pour siège (12), qui présente des enfoncements (16, 22) espacés dans la direction longitudinale du dispositif de réglage à crans et du dispositif de sécurité à crans, est agencé sur le corps de base (13) du véhicule pour enfants.

3. Véhicule pour enfants selon la revendication 2,
**caractérisé en ce**
**qu'**une partie de châssis (2) est fixée sous le siège avec une paroi de fond (8) et deux parois latérales parallèles (7), desquelles des éléments de guidage (9, 10) font saillie vers l'intérieur, qui entrent en prise dans des rainures de guidage (11) dans les parois extérieures (25) du bloc pour siège (12).

4. Véhicule pour enfants selon les revendications 1 à 3,
**caractérisé en ce**
**que** le dispositif de réglage à crans présente au moins un bras ressort (14) qui est fixé à la paroi de fond (8) et a au niveau de la zone d'extrémité un élément de blocage (15) en saillie vers le bas, qui s'adapte dans les enfoncements (16) du dispositif de réglage à crans et entre en prise dans un enfoncement (16) à l'état détendu du bras ressort (14).

5. Véhicule pour enfants selon la revendication 4,
**caractérisé en ce**
**que** deux bras ressorts (14) espacés latéralement sont réalisés avec respectivement un élément de blocage (15) et deux rangées d'enfoncements (16) espacées latéralement de manière correspondante.

6. Véhicule pour enfants selon les revendications 1 à 5,
**caractérisé en ce**
**que** le dispositif de sécurité à crans présente un dispositif ressort (19) et au moins un élément de blocage (21) au niveau de la paroi de fond (8) et des enfoncements (22) associés espacés dans la direction longitudinale dans le bloc pour siège (12), dans lequel le dispositif ressort (19) fait saillie vers le bas de la paroi de fond (8) à l'état détendu, de telle sorte que l'au moins un élément de blocage (21) est à l'extérieur des enfoncements (22).

7. Véhicule pour enfants selon la revendication 6,
**caractérisé en ce**
**que** le dispositif ressort (19) est un ressort à lame de préférence vouté, qui est monté au bord d'un évidement (20) et est pressé dans l'évidement (20) en cas de charge du siège (1), dans lequel l'au moins un élément de blocage (21) entre dans un des enfoncements (22).

8. Véhicule pour enfants selon les revendications 6 ou 7,
**caractérisé en ce**
**que** des éléments de blocage (21) sont réalisés des deux côtés du dispositif ressort (19) et deux rangées d'enfoncements (22) alignés les uns avec les autres sont réalisées dans le bloc pour siège (12).

9. Véhicule pour enfants selon les revendications 1 à 8,
**caractérisé en ce**
**que** l'au moins un bras ressort (14), de préférence deux bras ressort (14) sont reliés à une poignée (18) en saillie devant au-delà du siège (1), qui peut être soulevée pour que les éléments de blocage (15) du dispositif de réglage à crans sortent des enfoncements (16).

10. Véhicule pour enfants selon les revendications 1 à 9,
**caractérisé en ce**
**que** les rainures de guidage (11) présentent un étranglement (23) dans les parois extérieures (25) du bloc pour siège (12), qui servent de butée pour des éléments de guidage vers l'arrière (10) de la partie de châssis (2) pour la limitation de l'avance du siège (1).
